# EUROPEAN PATENT APPLICATION

(11) **EP 3 054 742 A1**
(43) Date of publication of application: **10.08.2016**
(21) Application number: 16000039.4
(22) Date of filing: 11.01.2016
(51) Int. Cl.: H04W 84/18, H04L 12/811, H04L 12/825

(54) **MOBILE AD HOC NETWORKING MEDIA AWARE NETWORKING ELEMENT**

(30) Priority: 04.02.2015 US 201514613762
(71) Applicant: HARRIS CORPORATION, Melbourne, FL 32919 (US)
(72) Inventor: Wasworth, Michael A., Palmyra, NY 14522 (US)
(74) Representative: Schmidt, Steffen J.

(57) **Abstract**

Systems **(100)** and methods **(200)** for controlling video stream distribution in an ad hoc network. A first network node **(116** or **120)** receives a first video stream **(108)** having a Scalable Video Codec format and a first Data Transfer Rate ("DTR"). The first network node resides between a video source device **(102/106)** and a video destination device **(124, 128** or **132).** The first network node then determines a second DTR for the first video stream based on conditions of communications links between the first network node and at least one second network node **(118, 120, 126** or **130)** downstream from the first network node. The first video stream is transferred from the first network node to the second network node at the second DTR which was previously determined, whereby any link quality impediments within the ad hoc network are resolved locally at the first network node.

## Description

### BACKGROUND

### Statement of the Technical Field

The inventive arrangements relate to Mobile Ad Hoc Networks ("MANETs"). More particularly, the inventive arrangements concern MANET Media Aware Networking Elements ("MANEs").

### Description of the Related Art

Robust video distribution in a dynamic ad-hoc network is a difficult problem. Video encoding is typically performed at a fixed output rate. In this regard, a video codec is configured to supply a certain level of quality such that it generates more or less a consistent output in terms of bits per second. This may vary somewhat depending on the source content in the output signals. Generally, the variation is of a nominal rate. Since the output data transfer rate of the video codec is a fixed setting, a binary proposition is provided as to whether or not the communication infrastructure can support a video stream output from such a video codec. In the dynamic mobile ad hoc network, only some of the communication infrastructure may support the video stream at any given time. As such, the video stream may not arrive at all of its intended destination devices of the dynamic ad hoc network.

Various solutions have been derived to address this problem in dynamic mobile ad-hoc networks. One solution employs a closed loop control of the video source based on throughput conditions over the entire unicast route or multicast tree. In the closed loop control scenarios, a determination is made at a recipient device as to what kind of throughput is being seen thereat. After making such a determination, the recipient device sends a message to the video source indicating that the communication link therebetween cannot support the video signal output therefrom with the particular throughput or data transfer rate (e.g., 1 Mbps). In response to the reception of this message, the video source and recipient device negotiate a new date rate for the video stream to be sent from the video source. This process of correcting the data transfer rate of a downstream signal takes a relatively long period of time to complete. As such, this solution is problematic in dynamic unicast environments. For example, if there is a process that is changing at a faster rate than the ability to control the data transfer rates of the video streams output from a video source, then thrashing will occur in the network. Also, a least-common-denominator effect limits video quality in multicast situations (i.e., the network node with the worst throughput will control what the video source outputs for all network nodes).

### SUMMARY OF THE INVENTION

The invention concerns implementing systems and methods for controlling video stream distribution in an ad hoc network. The methods comprise receiving, by a first network node, a first video stream having a Scalable Video Codec ("SVC") format and a first data transfer rate. The first network node resides between a video source device and a video destination device, and this constitutes an intermediary network node. Next, the first network node determines a second data transfer rate for the first video stream based on one-hop throughput conditions of a communications link between the first network node and a second network node downstream and one-hop away from the first network node, or based on multi-hop throughput conditions between further downstream network nodes in a communications path from the video source to an intended destination device. The first video stream is then transferred from the first network node to the second network node at the second data transfer rate which was previously determined. In effect, any link quality impediments within the ad hoc network are resolved locally at the first network node (rather than at the video source as is done in conventional ad hoc networks).

In some scenarios, the second data transfer rate is different than the first data transfer rate. If the second data transfer rate is lower than the first data transfer rate, then at least one enhancement layer may be pruned (or removed) from the composite first video stream prior to any transfer thereof to the second network node. The pruning of the enhancement layer from the first video stream may be based on a priority thereof and a priority of at least one other second video stream being transferred in the ad hoc network. The pruning may be performed to accommodate a reduced downstream data transfer rate. A reduced downstream data transfer rate may be caused by existing network traffic (e.g., network congestion) or may be caused by wireless propagation conditions.

Pruning may be affected by the congestion level of the ad hoc network, a current link quality, an estimate link quality as a function of time, and priority levels. Thus in those or other scenarios, a total number of enhancement layers for the first video stream is selected based on at least one of a congestion level of the ad hoc network, a current link quality, an estimate link quality as a function of time, and priority levels of at least two video streams. This selection may occur prior to any SVC encoding of the first video stream. Also, the total number of enhancement layers contained in the first video stream immediately after being SVC encoded may be different than that of a second video stream immediately after it has been SVC encoded.

At the source, the enhancement layer number and content is based on the network conditions. Network conditions vary with time and so the enhancement layer number and content for subsequent video streams may differ from the current video stream.

In those and yet other scenarios, a base layer of the first video stream is modulated onto a carrier signal using a first modulation scheme that is different than a second modulation scheme used to modulate an enhancement layer of the first video stream onto the carrier signal. Additionally or alternatively, different data transfer rates are used for at least a base layer and a first enhancement layer of the first video stream when a measured variance of a channel link quality or impulse response matrix over a given period of time reaches an undesirable level. A single data transfer rates may be used for at least a base layer and a first enhancement layer of the first video stream when a measured variance of a channel link quality or impulse response matrix over a given period of time is of a satisfactory level.

Notably, a network node involved in a unicast may choose to use differential modulation of the enhancement layers if warranted by channel condition variation with time. A network node involved in a multicast may choose to use differential modulation of the enhancement layers if warranted by channel condition variation in time and space. Therefore, in multi-cast scenarios, the above described process for controlling video stream distribution can be additionally employed when the measured variance of a channel link quality among a set of communication links originating from a source node exceeds a threshold value.

### BRIEF DESCRIPTION OF THE DRAWINGS

Embodiments will be described with reference to the following drawing figures, in which like numerals represent like items throughout the figures, and in which:
FIG. 1 is a schematic illustration of an exemplary architecture for a system that is useful for understanding the present invention.
FIG. 2 is a flow diagram of an exemplary method for controlling video stream distribution in an ad hoc network.

### DETAILED DESCRIPTION

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout the specification may, but do not necessarily, refer to the same embodiment.

Furthermore, the described features, advantages and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment", "an embodiment", or similar language means that a particular feature, structure, or characteristic described in connection with the indicated embodiment is included in at least one embodiment of the present invention. Thus, the phrases "in one embodiment", "in an embodiment", and similar language throughout this specification may, but do not necessarily, all refer to the same embodiment.

As used in this document, the singular form "a", "an", and "the" include plural references unless the context clearly dictates otherwise. Unless defined otherwise, all technical and scientific terms used herein have the same meanings as commonly understood by one of ordinary skill in the art. As used in this document, the term "comprising" means "including, but not limited to".

The present invention generally concerns systems and methods for controlling video stream distribution in a mobile ad hoc network. The video stream distribution is controlled locally based on local propagation conditions. Thus, any one of a plurality of intermediate network nodes (e.g., relay nodes) makes a decision as to what are the quality and propagation conditions of a communications link to a next hop device in a communications path (i.e., what throughput can that communications link sustain). Based on the results of this decision, the network node may send only a portion of a Scalable Video Codec ("SVC") encoded video stream that will fit the capacities supported by the next hop node. In effect, the destination devices of the network do not have to negotiate with the video source for a new data transfer rate when a dynamic change occurs with regard to the quality and/or propagation conditions of the communications link established therebetween. Instead, any link quality impediments are resolved locally where they occur in the network.

Consequently, the present invention can handle quickly varying network conditions in a much more efficient and timely manner as compared to conventional closed loop control solutions (such as that discussed in the background section of this paper). Also, in the present case, the least-common-denominator effect does not limit video quality in multicast situations (i.e., the network node with the worst throughput will not control what the video source outputs for all network nodes). Accordingly, network nodes with high link quality routes to the video source will receive relatively high quality video, while network nodes with low link quality routes to the video source will receive relatively low quality video. The manner in which this video stream distribution is achieved will become evident as the discussion progresses. However, it should be understood that enhancement layers may be pruned from the SVC encoded video stream so as to reduce the quality and bit rate thereof. Enhancement layers will be discussed below.

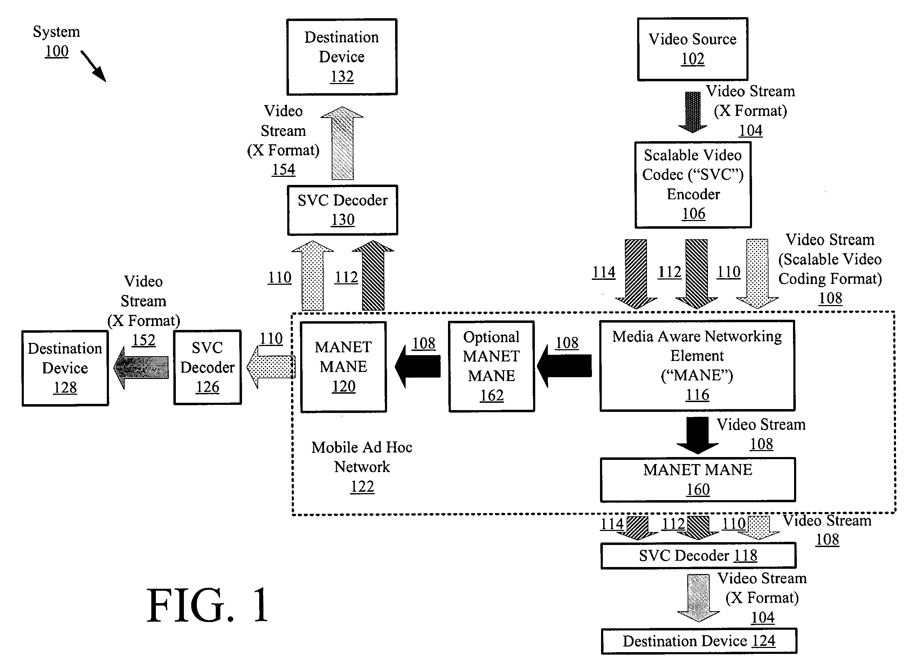

Referring now to FIG. 1, there is provided a schematic illustration of an exemplary architecture for a system **100** that is useful for understanding the present invention. System **100** is generally configured to control the distribution of data streams based at least on the contents of the data streams (e.g., audio and/or video). Thus, system **100** comprises a mobile ad hoc network **122** employing MANET MANEs **116, 120, 160, 162**. The MANET MANEs **116, 120**, **160**, **162** employ a novel technique for handling video stream distribution. The novel techniques will become evident as the discussion progresses. Still, it should be understood that each MANET MANE **116, 120, 160, 162** is generally a network element capable of parsing network traffic (including, but not limited to, network-layer DCSP markings, Real-Time Transport Protocol ("RTP") payload headers, and/or application payload) and reacting to the contents. The MANET MANE processing operates across multiple protocol layers of an OSI protocol stack. As should be understood, the protocol layers include an application layer, a transport layer, a network layer, a media access control layer, a data link layer, and a physical layer. Thus, the MANET MANE processing provides full cross-layer optimization and wireless cognizance.

During operation of system **100,** a video source **102** generates a video stream **104** having a particular format **X.** The video source **102** can include, but is not limited to, a personal computer. Personal computers are well known in the art, and therefore will not be described herein. Format **X** can include, but is not limited to, an MPEG video format, an H.320 video format, and/or a Digital Video Disc ("DVD") video format. Each of the listed types of video formats is well known in the art, and therefore will not be described herein. The video stream **104** is then sent to an SVC encoder **106.**

At the SVC encoder **106,** the video stream **104** is encoded in accordance with an SVC technology so as to form a video stream **108** having an SVC format. Scalable video encoding techniques are well known in the art, and therefore will not be described in detail herein. However, it should be understood that scalable video encoding generally involves encoding bits of a video stream (e.g., video stream **104**) into bits-to-be-transported via a network (e.g., the mobile ad hoc network **122**) in a compartmentalized fashion. In effect, the coded video stream output from SVC encoder **106** comprises a lower data transfer rate, lower quality video stream **108** with a base layer **110** and a plurality of enhancement layers **112, 114.** Although only two enhancement layers are shown in FIG. 1, the present invention is not limited in this regard. Any number of enhancement layers may be employed herein in accordance with a particular application.

Notably, the layers **110-114** are carried as separate identifiable data streams through system **100.** As such, each layer **110-114** can be sent through the system using the same or different modulation schemes. For example, the base layer **110** may be modulated on a first carrier signal using a more robust modulation technique than that used to modulate the enhancement layers **112, 114** onto a second carrier signal. In turn, the enhancement layer **112** may be modulated on a more robust modulation technique than the enhancement layer **114.** This modulation technique provides analog-like video quality degradation, increased video range and receiver-driven broadcast performance for silent network participants.

Each layer **110-114** can also be sent through the system at the same or different data transfer rate. For example, in single data transfer rate mode scenarios, all of the layers **110-114** are sent at 400 kilobits per second. In multi data transfer rate scenarios, the base layer can be sent through the system **100** at 200 kilobits per second, while the enhancement layers **112, 114** are sent at 400 kilobits per second. In turn, enhancement layer **114** may alternatively be sent at 800 kilobits per second. In effect, at least the base layer of the video stream will still be delivered to the intended destination device when variations in channel quality unexpectedly occur. As such, a wider set of signal conditions is provided at which the video stream can travel through system **100** without being entirely lost or dropped due to rapidly varying channel conditions. The present invention is not limited to the particular data transfer rates used in this example.

Notably, system **100** can operate in either the single or multi data transfer rate mode at any given time. Trigger events can cause the system to operate in one of the particular data transfer rate modes and/or transition to another data transfer rate mode. Such trigger events can include, but are not limited to, the degree of variance of a channel link quality and/or an impulse response matrix over a given period of time.

In some scenarios, the total number of enhancement layers contained in a video stream is fixed. In other scenarios, the total number of enhancement layers contained in a video stream is advantageously variable based on congestion levels in system **100,** a current link quality, an estimate link quality as a function of time, and/or priority levels of video stream relative to each other. The maximum number of enhancement layers (e.g., 4X) may be selected to provide at least a 10 dB range of variation in signal quality that the SVC coding of the SVC encoder **106** can produce. Such a maximum number would allow data transfer rates at least between 250 kilobits per second to 2.5 Megabits per second. Notably, in this case, a plurality of video streams generated by SVC encoder **106** may have different numbers of enhancement layers. For example, a high priority video stream comprises four enhancement layers, while a low priority video stream comprises one enhancement layer.

The aggregate of the base layer **110** and the enhancement layers **112, 114** creates a relatively high quality (potentially high definition) representation of the video stream **104.** Each enhancement layer **112, 114** creates a higher level of video quality when applied to the base layer **110.** Therefore, an SVC encoded video stream comprising two enhancement layers **112, 114** has a higher quality level as compared to an SVC encoded video stream comprising only one enhancement layer **112.** Stated differently, the quality of the video stream improves with the addition of an enhancement layer, and degrades with the loss of an enhancement layer. Also, the addition of an enhancement layer increases the data transfer rate of the composite encoded video stream. In contrast, the removal of an enhancement layer decreases the data transfer rate of the composite encoded video stream.

The SVC encoded video stream **108** is then sent from the SVC encoder **106** to the source-side MANET MANE **116.** In some scenarios, the video stream **108** may be encrypted prior to being communicated from the SVC encoder **106** to the MANET MANE **116.** The MANET MANE **116** does not need to decrypt the video stream prior to processing the same for enhancement layer pruning purposes and/or routing purposes. This is at least partially a result from the fact that some of the video stream header fields (e.g., a Differential Service Code Point ("DSCP") marking) bypass the encryption device, and are used by the MANET MANE **116** during its operations described below to identify the base layer **110** and each of the enhancement layers **112, 114.**

At the source-side MANET MANE **116** (or another relaying MANE **160**), a data transfer rate decision for the composite SVC encoded video stream is made based on the one-hop throughput conditions and/or further downstream throughput conditions, i.e., the quality and propagation metrics of a communications link between the MANET MANE **116** and the next network node **160** or **162** in a communications path from the video source **102** to at least one intended destination device **124** or **128/132.** The quality of the communications link is determined based on the Signal to Noise Ratio ("SNR"), estimations of channel impulse responses, channel parameters, delay spread, and/or Doppler spread. For example, if the communications link between MANET MANE **116** and a next network node **160** or **162** can support a high throughput rate, then the MANET MANE **116** sends the entire SVC encoded video stream **108** to the next network node **160** or **162** without pruning any of the enhancement layers therefrom. In contrast, if the communications link between MANET MANE **116** and a next network node **160** or **162** can support an intermediary throughput rate and not a high throughput rate, then the MANET MANE **116** prunes at least one enhancement layer from the video stream and forwards the pruned video stream to the next network node **160** or **162.** As a result of employing the one-hop throughput based technique, link quality impediments are resolved locally at the MANET MANE **116** based on wireless networking knowledge (relating to the media access layer, data link layer and/or physical layer). Notably, this is not the case in conventional CAN-based systems. The present invention is not limited to the particulars of this example. In some scenarios, pruning of the enhancement layer can be based alternatively or additionally in accordance with priority based congestion resolution (i.e., the priority of data of a first data stream is higher or lower than that contained in a second data stream). Additionally or alternatively, the MANET MANE **116** may prune at least one enhancement layer from the video stream and forward the pruned video stream to the MANET MANE **162** if the reported link quality between the MANET MANE **162** and the MANET MANE **120** supports an intermediary throughput rate and not a high throughput rate.

As shown in FIG. 1, the next network node of a first communication path comprises SVC decoder **160.** Since the communications link between the MANET MANE **116** and the SVC decoder **160** can support a high throughput rate, the entire SVC encoded data stream **108** is sent thereto from MANET MANE **116.** Similarly, the entire SVC encoded data stream **108** is sent from MANET MANE **160** to an SVC decoder **118.**

As also shown in FIG. 1, the next network node of a second communication path comprises MANET MANE **120.** Since the communications link between the MANET MANE **116** and the MANET MANE **120** can support a high throughput rate, the entire SVC encoded data stream **108** is sent thereto from MANET MANE **116.** In effect, the MANET MANE **116** simply provides the same video stream to the MANET MANE **162** for multiple destination nodes **128, 132** without having to respectively create separate video streams therefore which have different data transfer rates. In turn, the entire SVC encoded data stream **108** is sent from MANET MANE **162** to a MANET MANE **120.**

The present invention is not limited to the embodiment shown in FIG. 1. For example, video stream **108** may include additional components other than components **110-114.** In this case, MANET MANE **162** may perform operations to prune the additional component(s) from the video stream **108** prior to forwarding the same to the MANET MANE **120.**

This is significantly different than what is done in conventional MANET systems. In conventional unicast MANET systems, data transfer rate decisions are made by the video source **102/106** based on reported end-to-end throughput conditions (and do not include decision criteria based on MANET conditions such as wireless link quality and congestion), which may not be able to track dynamic wireless network conditions. In conventional multicast MANET systems, data transfer rate decisions are made by the video source based on lowest common denominator reported end-to-end throughput conditions.

As noted above, the entire SVC encoded video stream **108** is communicated to the SVC decoder **118** and the MANET MANE **120.** The SVC decoder **118** decodes the SVC encoded video stream **108,** and forwards the decoded video stream **104** to the destination device **124.**

In some scenarios, the video stream **108** may be encrypted prior to being communicated to the MANET MANE **120.** The MANET MANE **120** does not need to decrypt the video stream prior to processing the same for enhancement layer pruning purposes and/or routing purposes. This is at least partially a result from the fact that some of the RTP stream header fields (e.g., DSCP marking) bypass the encryption device, and are used by the MANET MANE **120** during its operations described below to identify the base layer **110** and each of the enhancement layers **112, 114.**

The operations performed by the MANET MANE **120** involve making data transfer rate decisions for the composite SVC encoded video stream based on wireless local network conditions, i.e., the conditions of a communications link between the MANET MANE **120** and a next network node **126** or **130,** or conditions further removed (i.e., the conditions between network nodes **126** and **120**). For example, let's assume that the communications link (e.g., an Ethernet link) between the MANET MANE **120** and the SVC decoder **126** can only support the lowest level throughput or that the display abilities of the destination device **128** can only support the lowest level throughput or data transfer rate. In this case, the MANET MANE **120** processes the SVC encoded video signal **108** so as to remove all of the enhancement layers **112, 114** therefrom. In effect, only the base layer **110** of the video signal **108** is sent from the MANET MANE **120** to the SVC decoder **126.** The SVC decoder **126** then decodes the base layer **110** and sends the decoded base layer **152** to the destination device **128.** Let's also assume that the communications link between the MANET MANE **120** and the SVC decoder **130** can support the middle level throughput or that the display abilities of the destination device **132** can support the middle level throughput or data transfer rate. In this case, the MANET MANE **120** processes the SVC encoded video signal **108** so as to remove the enhancement layer **112** therefrom. Accordingly, the base layer **110** and the enhancement layer **112** are sent from the MANET MANE **120** to the SVC decoder **130.** The SVC decoder **130** then decodes the base layer **110** and the enhancement layer **112,** and sends the decoded video stream component **154** to the destination device **132.** As a result of employing the one-hop throughput based technique, link quality impediments are resolved locally at the MANET MANE **120,** and not at the video source **102/106** as is done in conventional CAN-based systems.

Notably, the system **100** provides graceful video quality degradation with network offered load. For example, in some scenarios, there may be multiple video streams in existence at a particular place in the system **100.** Instead of not supporting one of the video streams in favor of another one of the video streams, the system **100** would support both video streams at any given time by pruning one or more enhancement layers therefrom. As mentioned above, the number of enhancement layers that are pruned from each video stream can be based on the relative priorities of the video streams. This is significantly different than what occurs in conventional CAN-based systems. In the conventional CAN-based systems, one of the video streams would be dropped based on its priority level as compared to that of the other video stream.

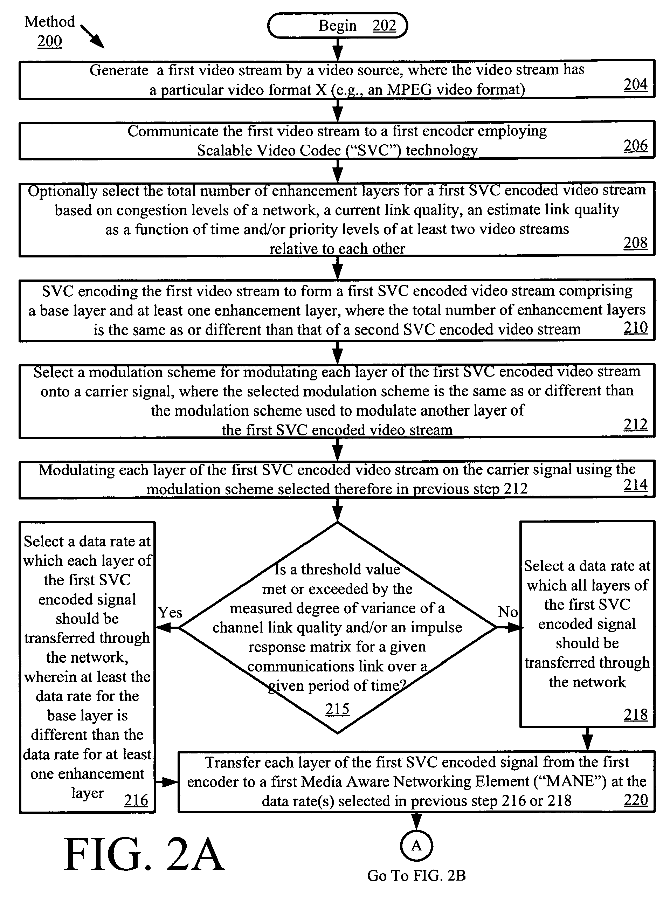

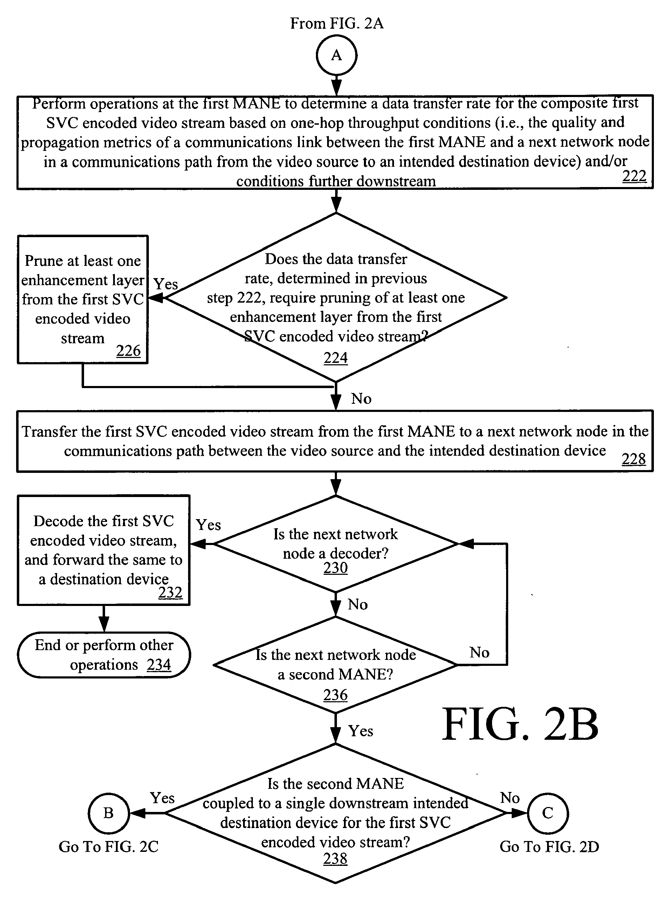

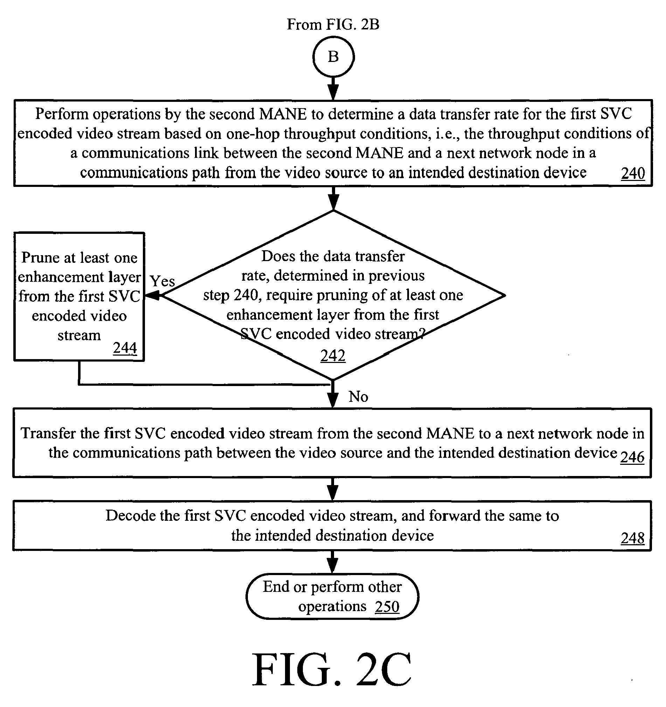

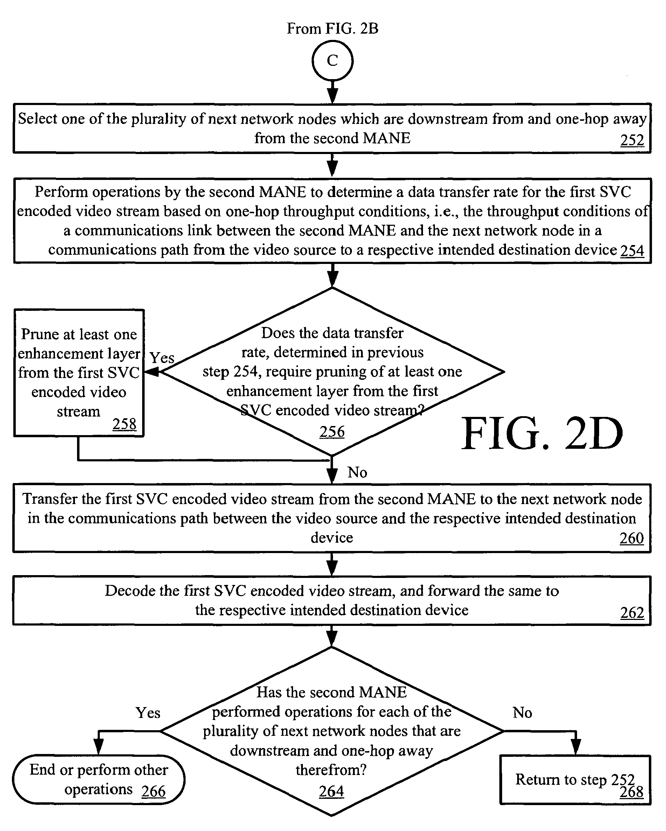

Referring now to FIG. 2, there is provided a flow diagram of an exemplary method **200** for controlling video stream distribution in an ad hoc network. Method **200** begins with step **202** and continues with step **204.** In step **204,** a first video stream (e.g., video stream **104** of FIG. 1) is generated by a video source (e.g., video source **102** of FIG. 1). The first video stream has a particular video format **X.** Video format **X** can include, but is not limited to, an MPEG video format, an H.320 video format, and/or a Digital Video Disc ("DVD") video format. Each of the listed types of video formats is well known in the art, and therefore will not be described herein.

As shown by step **206,** the first video stream is then communicated from the video source to a first encoder (e.g., SVC encoder **106** of FIG. 1). Notably the first encoder employs SVC technology. Thus, in a next optional step **208,** a total number of enhancement layers for a first SVC encoded video stream is selected based on congestion levels of a network, a current link quality, an estimate link quality as a function of time, and/or priority levels of at least two video streams relative to each other.

The first SVC encoded video stream (e.g., video stream **108** of FIG. 1) is then generated in step **210** by SVC encoding the first video stream. The first SVC encoded video stream comprises a base layer (e.g., base layer **110** of FIG. 1) and at least one enhancement layer (e.g., enhancement layer **112** and/or **114** of FIG. 1). The total number of enhancement layers contained in the first SVC encoded video stream is the same as or different than that of a second SVC encoded video stream.

In step **212,** a modulation scheme is selected for each layer of the first SVC encoded video stream. The selected modulation scheme may be the same as or different than the modulation scheme used to modulate another layer of the first SVC encoded video stream. After the modulation scheme(s) is(are) selected, each layer of the SVC encoded video stream is modulated onto the carrier signal in accordance with the modulation scheme previously selected therefore, as shown by step **214.**

Upon completing step **214,** method **200** continues with a decision step **215.** Decision step **215** involves determining whether or not a threshold value is met or exceeded by a measured degree of variance of a channel link quality and/or an impulse response matrix for a given communications link over a given period of time and the expected path(s) of travel in the network. If the threshold value is met or exceeded [**215:YES**], then step **216** is performed where a data rate is selected for each layer of the first SVC encoded video stream. The selected data rate is the data transfer rate at which the respective layer should be transferred through the network. At least the data transfer rate for the base layer of the first SVC encoded video stream is different than the data transfer rate for at least one enhancement layer of the first SVC encoded video stream. For example, the data transfer rate selected for the base layer is lower than the data transfer rate for an enhancement layer. Upon completing step **216,** step **220** is performed. Step **220** will be described below.

If the threshold value is not met or exceeded [**215:NO**], then step **218** is performed where a data rate is selected for all of the layers of the first SVC encoded video stream. The data rate comprises the data transfer rate at which all of the layers of the first SVC encoded video stream should be transferred through the network. Thereafter, step **220** is performed. In step **220,** each layer of the first SVC encoded signal is transferred from the first encoder to a first MANE (e.g., MANET MANE **116** of FIG. 1) at the data rate(s) selected in previous step **216** or **218.** Once step **220** is completed, method **200** continues to step **222** of FIG. 2B.

As shown in FIG. 2B, step **222** involves performing operations at the first MANE to determine a data transfer rate for the composite first SVC encoded video stream. This determination is based on one-hop throughput conditions (i.e., the quality and propagation metrics of a communications link between the first MANE and a next network node in a communications path from the video source to an intended destination device) and/or multi-hop throughput conditions further downstream (i.e., the quality and propagation metrics of a communications link between further downstream network nodes in a communications path for the video source to an intended destination device). After the data transfer rate has been determined, a decision step **224** is performed.

Decision step **224** involves determining whether or not the data transfer rate requires pruning of at least one enhancement layer from the first SVC encoded video stream. If the pruning is not required [**224:NO**]**,** method **200** continues with step **228,** which will be discussed below. In contrast, if the pruning is required [**224:YES**], step **226** is performed where at least one enhancement layer is pruned from the first SVC encoded video stream. Next in step **228,** the first SVC encoded video stream is transferred from the first MANE to a next network node in the communications path between the video source and the intended destination device.

If the next network node is a decoder (e.g., SVC decoder **118** of FIG. 1) **[230:YES],** then step **232** is performed where the first SVC encoded video stream is decoded and forwarded to the respective destination device (e.g., destination device **124** of FIG. 1). Thereafter, the method **200** ends or other processing is performed as shown by step **234.**

If the next network node is not a decoder but rather a second MANE (e.g., MANE **120** of FIG. 1) [**236:NO**] and [**236:YES**], then a decision is made in step **238** as to whether or not the second MANE is coupled to a single downstream intended destination device for the first SVC encoded video stream. If the second MANE is coupled to a single downstream intended destination device, method **200** continues with step **240** of FIG. 2C. In contrast, if the second MANE is coupled to more than one downstream intended destination device, method **200** continues with step **252** of FIG. 2D.

Referring now to FIG. 2C, step **240** involves performing operations by the second MANE to determine a data transfer rate of the first SVC encoded video stream. This determination is made based on one-hop throughput conditions (i.e., the throughput conditions of a communications link between the second MANE and a next network node in a communications path from the video source to an intended destination device). Once the data transfer rate has been determined, a decision is made in step **242** as to whether or not the data transfer rate requires pruning at least one enhancement layer from the first SVC encoded video stream. If pruning is required [**242:YES**], then at least one enhancement layer is pruned from the first SVC encoded video stream, as shown by step **244.** Thereafter, step **246** is performed which will be described below. If pruning is not required [**242:NO**], then none of the enhancement layers are pruned from the first SVC encoded video stream. As such, method **200** continues with step **246.** In step **246,** the first SVC encoded video stream is transferred from the second MANE to a next network node (e.g., SVC decoder **118** of FIG. 1) in the communications path between the video source and the respective intended destination device (e.g., destination device **124** of FIG. 1). At the next network node, the first SVC encoded video stream is decoded and forwarded to the respective intended destination device, as shown by step **248.** Subsequently, step **250** is performed where method **200** ends or other processing is performed.

Referring now to FIG. 2D, step **252** involves selecting one of a plurality of next network nodes (e.g., SVC decoders **126** and **130** of FIG. 1) which are downstream from and one-hop away from the second MANE. Next in step **254,** the second MANE performs operations to determine a data transfer rate for the first SVC encoded video stream based on one-hop throughput conditions (i.e., the throughput conditions of a communications link between the second MANE and the next network node in a communications path from the video source to a respective intended destination device). Once the data transfer rate has been determined, a decision is made in step **256** as to whether or not the data transfer rate requires pruning of at least one enhancement layer from the first SVC encoded video stream.

If pruning is required [**256:YES**], then at least one enhancement layer is pruned from the first SVC encoded video stream as shown by step **258.** In contrast, no pruning is performed when it is not required [**256:NO**]**.** Next in step **260,** the first SVC encoded video stream is transferred from the second MANE to the next network node (e.g., SVC decoder **126** or **130** of FIG. 1) in the communications path between the video source and the respective intended destination device (e.g., destination device **128** or **130** of FIG. 1). At the next network node, the first SVC encoded video stream is decoded and forwarded to the respective intended destination device, as shown by step **262.** Upon completing step **262,** decisions step **264** is performed in which a decision is made as to whether or not the second MANE has performed operations for each of the plurality of next network nodes that are downstream and one-hop away therefrom. If not [264:NO], then method **200** returns to step **252.** If so **[264:YES],** then step **266** is performed where method **200** ends or other operations are performed.

In view of the forgoing, the present disclosure concerns: a scalable video encoder that selects encoding parameters based on MANET conditions; and a source MANET MANE that selects one or more modulation formats for the scalable video stream components based on MANET conditions; a forwarding MANET MANE that selectively forwards scalable video stream components based on MANET conditions and that may or may not alter the modulation formats associated with each stream component; and source and forwarding MANET MANEs that are capable of recognizing scalable video stream components when they are encrypted. The MANET conditions can include, but are not limited to: a given node's set of one-hop link quality metrics to its immediate neighbor (e.g., instantaneous values and/or variance in time); all one-hop link quality metrics within a possible path of travel for the subject video stream (e.g., instantaneous values, variance in time, variance in space); and/or the existing traffic being carried by the MANET and its relative priority in relation to the subject video stream. The link metrics include, but are not limited to, SNR, channel impulse response delay spread, Doppler spread and MIMO channel metrics.

All of the apparatus, methods and algorithms disclosed and claimed herein can be made and executed without undue experimentation in light of the present disclosure. While the invention has been described in terms of preferred embodiments, it will be apparent to those of skill in the art that variations may be applied to the apparatus, methods and sequence of steps of the method without departing from the concept, spirit and scope of the invention. More specifically, it will be apparent that certain components may be added to, combined with, or substituted for the components described herein while the same or similar results would be achieved. All such similar substitutes and modifications apparent to those skilled in the art are deemed to be within the spirit, scope and concept of the invention as defined.

## Claims

1. A method for controlling video stream distribution in an ad hoc network, comprising:
receiving, by a first network node, a first video stream having a Scalable Video Codec ("SVC") format and a first data transfer rate, the first network node residing between a video source device and a video destination device;
determining, by the first network node, a second data transfer rate for the first video stream based on one-hop throughput conditions of a communications link between the first network node and a second network node downstream and one-hop away from the first network node; and
transferring the first video stream from the first network node to the second network node at the second data transfer rate which was previously determined, whereby any link quality impediments within the ad hoc network are resolved locally at the first network node.

2. The method according to claim 1, wherein the second data transfer rate is different than the first data transfer rate.

3. The method according to claim 1, further comprising pruning at least one enhancement layer from the first video stream prior to said transferring when the second data transfer rate is lower than said first data transfer rate.

4. The method according to claim 1, further comprising selecting a total number of enhancement layers for the first video stream based on at least one of a congestion level of the ad hoc network, a current link quality, an estimate link quality as a function of time, and priority levels of at least two video streams.

5. The method according to claim 1, wherein the total number of enhancement layers contained in the first video stream immediately after being SVC encoded is different than that of a second video stream immediately after being SVC encoded.

6. The method according to claim 1, further comprising modulating a base layer of the first video stream onto a carrier signal using a first modulation scheme that is different than a second modulation scheme used to modulate an enhancement layer of the first video stream onto the carrier signal.

7. The method according to claim 1, wherein the transferring is performed using different data transfer rates for at least a base layer and a first enhancement layer of the first video stream when a measured variance of a channel link quality or impulse response matrix over a given period of time reaches an undesirable level.

8. The method according to claim 1, wherein the transferring is performed using a single data transfer rate for at least a base layer and a first enhancement layer of the first video stream when a measured variance of a channel link quality or impulse response matrix over a given period of time is of a satisfactory level.

9. The method according to claim 1, further comprising pruning at least one enhancement layer from the first video stream based on a priority thereof and a priority of at least one other second video stream being transferred in the ad hoc network.

10. A system, comprising:
a first network node residing between a video source device and a video destination device, the first network node configured to
receive a first video stream having a Scalable Video Codec ("SVC") format and a first data transfer rate,
determine a second data transfer rate for the first video stream based on one-hop throughput conditions of a communications link between the first network node and a second network node downstream and one-hop away from the first network node, and
transfer the first video stream from the first network node to the second network node at the second data transfer rate which was previously determined, whereby any link quality impediments within an ad hoc network are resolved locally at the first network.
